# EUROPEAN PATENT APPLICATION

(11) **EP 3 141 167 A1**
(43) Date of publication of application: **15.03.2017**
(21) Application number: 14891437.7
(22) Date of filing: 01.10.2014
(51) Int. Cl.: A47J 37/06, A47J 27/00

(54) **MULTI-PURPOSE HEATING DEVICE**

(30) Priority: 03.05.2014 KR 20140053723
(71) Applicant: Lee, Ye Sun, Nonsan-si, Chungcheongnam-do 320-835 (KR); Oh, Da Yeon, Seoul 158-751 (KR)
(72) Inventor: OH, Moon Sub, Namwon-si Jeollabuk-do 590-984 (KR)
(74) Representative: Lermer, Christoph
(86) International application number: PCT/KR2014/009267
(87) International publication number: WO 2015/170806

(57) **Abstract**

The present invention relates to a multi-purpose heating device comprising: a first heating unit disposed at the bottom thereof; a second heating unit disposed at the top thereof; and a pillar which vertically connects one side end of the first heating unit with one side end of the second heating unit so as to form a space between the first and second heating units, the device being capable of cooking food through the first heating unit disposed at the bottom thereof and at the same time applying heat, through the second heating unit disposed at the top thereof, to the food being cooked by the first heating unit disposed at the bottom thereof, wherein the first and second heating units are controlled by individual power supply and power cut-off and the second heating unit can perform a heating function through up and down rotation on the basis of the pillar.

## Description

### Technical Field

The present invention relates to a multi-purpose heating device comprising: a first heating unit disposed at the bottom thereof; a second heating unit disposed at the top thereof; and a pillar which vertically connects one side end of the first heating unit with one side end of the second heating unit so as to form a space between the first and second heating units, the device being capable of cooking food through the first heating unit disposed at the bottom thereof and at the same time applying heat, through the second heating unit disposed at the top thereof, to the food being cooked by the first heating unit disposed at the bottom thereof, wherein the first and second heating units are controlled by individual power supply and power cut-off and the second heating unit can perform a heating function through up and down rotation on the basis of the pillar.

### Background Art

A cooking device for cooking foods, for example, meat, etc. is configured to cook using a direct or indirect radiant heat from a heater. Many kinds of the cooking devices are being used. Charcoal fire, gas, electricity, etc. is used as a heat source. Such heat sources are being provided in a variety of forms.

The method for directly cooking foods using charcoal fire and gas fire, in general, has been used so far. In case of a long time cooking, it needs to continuously supply new charcoal or gas, and in case of charcoal, it is hard to keep the temperature of charcoal constant, thus causing a disadvantage. In case of gas, it may cause a safety problem when in use. In case of electricity, it is easy to use, and temperature can be freely controlled, and it does not cause any safety problem. For this reason, a cooking device configured to use electricity is being widely used.

The electric cooking device using electricity may be categorized into a method wherein the heat of a heater heated by the supply of electricity is directly transferred to foods, and a method wherein the foods are cooked by an indirect radiant heat after the heat is generated by a separate heating plate, etc. In case of the direct heat transfer method, the cooking time may be saved, but heat is directly transferred to the foods, the moisture container in the foods may vaporize quickly, and the inner and outer sides of the foods may be heated different, and any nutrients may be destroyed a lot. Consequently, the tastes of the foods may be degraded, and the cooked foods may become hardened quickly, for which a user's appetite may be lost. Moreover, since the moisture contained in the foods vaporizes quickly, the inner and outer sides of the foods may be cooked different. In order to resolve this problem, an electric heat cooking device is proposed in recent years, which is adapting a method wherein foods are cooked using the indirect heat from a halogen lamp.

According to the Korean patent registration number 0833966 referred to a conventional cooking device, it has a disadvantage in the way that heat cannot be quickly transferred to the whole front and rear sides of a cooking target, for which a cooking time may increase. Moreover, an additional heating unit is installed at the top thereof so as to heat the upper side of the food; however when a user near a cooking device cuts or picks up foods, the user may feel inconvenient due to the presence of a heating unit installed at the top of the cooking device. For this reason, it urgently needs to develop a new heating device which is able to decrease cooking time as compared to a conventional cooking device in such a way to evenly transfer heat to the front and rear sides of a cooking target and to enhance a convenience when cooking, wherein a user can easily pick up foods.

### Disclosure of Invention

Accordingly, it is an object of the present invention to provide a multi-purpose heating device which is formed of a first heating unit disposed at the bottom thereof; a second heating unit disposed at the top thereof; and a pillar which vertically connects one side end of the first heating unit with one side end of the second heating unit so as to form a space between the first and second heating units, by which the upper side, the lower side and the inner side of the foods can be evenly cooked, and since the second heating unit connected to the top of a support unit rotates upward, it is easy to use a container having a higher height, for example, a steam cooker, a kettle, etc., and a user near a cooking device can easily cook or pick up foods, and the second heating unit can carry out a warm heat function since the first and second heating units are independently controlled.

To achieve the above objects, there is provided a multi-purpose heating device, which may include, but is not limited to, a first heating unit 100 disposed at the bottom thereof; a second heating unit 200 disposed at the top thereof; and a pillar 300 which vertically connects one side end of the first heating unit 100 with one side end of the second heating unit 200 so as to form a space between the first and second heating units 100 and 200, wherein the first heating unit 100 includes a first body 110 equipped with a first accommodation part 111 configured to accommodate a first heat generation member 120 formed of any one of ceramic, a coil, carbon, a crystal tube, a PTC (Positive Temperature Coefficient) heater, an infrared ray lamp and a halogen lamp, which are able to emit heat in to the inside based on the supply of electricity; a heat transfer plate 130 which is equipped with a tubular oil discharge tube 131 communicating with the center of the bottom surface of the first accommodation part 111 in the center thereof, while covering the top of the first body 110; a cooking plate 140 which is equipped with an oil guide piece 142 protruding from an outer circumferential end of the lower side of an oil discharge hole 141 formed in the center thereof, while being seated at the top of the heat transfer plate 130; and an oil collector 150 which is installed at the lower side of the first body 110 so as to correspond to the lower end of the oil discharge tube 131 of the heat transfer plate 130; and the second heating unit 200 includes a second body 210 which is equipped with a second accommodation part 211 configured to accommodate a second heat generation member 220 formed of any one of ceramic, a coil, carbon, a crystal tube, a PTC (Positive Temperature Coefficient) heater, an infrared ray lamp, and a halogen lamp in a state where the lower side thereof is open; and a protective net 240 configured to cover the lower side of the second body 210; and the pillar 300 which is fixed using a bolt 50 through an engaging hole 302 formed at a lower end of the pillar 300 so as to be fixed at a surface of one side of the first heating unit 100, wherein a rotation piece 301 is formed at the top of the pillar 300 so as to be engaged by means of a hinge 202 through a pair of engaging pieces 201 spaced-apart at a surface of one side of the second heating unit.

Moreover, the heat transfer plate 130 of the first heating part 100 is made of a ceramic plate or a tempered glass plate, and the cooking plate 140 is made of a transparent tempered glass.

### Advantageous Effects of the Invention

The multi-purpose heating device according to the present invention is formed of a first heating unit disposed at the bottom thereof; a second heating unit disposed at the top thereof; and a pillar which vertically connects one side end of the first heating unit with one side end of the second heating unit so as to form a space between the first and second heating units, by which the upper side, the lower side and the inner side of the foods can be evenly cooked, and cooking time can be saved, and since the second heating unit connected to the top of a support unit rotates upward, it is convenient to use a steam cooker, a water kettle, etc., which have a higher height, and a user near a cooking device can easily cook or pick up and eat foods, and the second heating unit can be selectively used for a cooking purpose or a warm heating purpose since the first and second heating units are independently controlled.

### Brief Description of Drawings

The present invention will become better understood with reference to the accompanying drawings which are given only by way of illustration and thus are not limitative of the present invention, wherein;
Figure 1 is a view illustrating the structure of a multi-purpose heating device;
Figure 2 is an assembled separate view illustrating a multi-purpose heating device;
Figure 3 is an assembled view illustrating a second heating unit and a pillar in a multi-purpose heating device;
Figure 4 is a view illustrating a configuration wherein a cooking plate of a first heating unit is assembled to a heat transfer plate in a multi-purpose heating device according to the present invention;
Figure 5 is a view illustrating the configuration of a first heating unit in a multi-purpose heating device according to the present invention;
Figure 6 is a view illustrating the configuration of a second heating unit in a multi-purpose heating device according to the present invention;
Figure 7 is a view illustrating a configuration wherein a multi-purpose heating device is equipped with a circular structure according to the present invention;
Figure 8 is a view illustrating a configuration wherein electricity is supplied to or is not supplied to the first and second heating units of a multi-purpose heating device according to the present invention;
Figure 9 is a view illustrating a configuration wherein a protective case is assembled to a first body of a first heating unit in a multi-purpose heating device according to the present invention;
Figure 10 is a cross sectional view illustrating a configuration wherein a protective case and a first body are assembled in a multi-purpose heating device according to the present invention; and

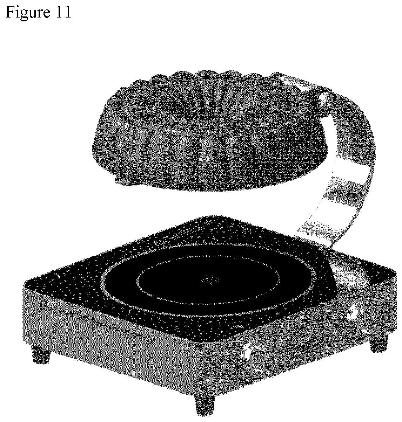

Figure 11 is a photo image showing an embodiment of a multi-purpose heating device according to the present invention.

### Modes for carrying out the invention

The embodiments of the present invention will be described with reference to the accompanying drawings.

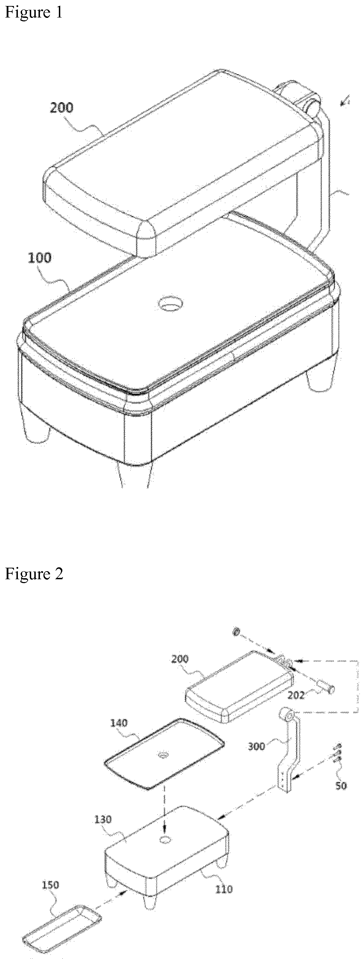

As illustrated in Figures 1 to 6, the multi-purpose heating device according to the present invention may include, but is not limited to a first heating unit 100 disposed at the bottom thereof; a second heating unit 200 disposed at the top thereof; and a pillar 300 which vertically connects one side end of the first heating unit 100 with one side end of the second heating unit 200 so as to form a space between the first and second heating units 100 and 200, wherein the first heating unit 100 includes a first body 110 equipped with a first accommodation part 111 configured to accommodate a first heat generation member 120 formed of any one of ceramic, a coil, carbon, a crystal tube, a PTC (Positive Temperature Coefficient) heater, an infrared ray lamp and a halogen lamp, which are able to emit heat in to the inside based on the supply of electricity; a heat transfer plate 130 which is equipped with a tubular oil discharge tube 131 communicating with the center of the bottom surface of the first accommodation part 111 in the center thereof, while covering the top of the first body 110; a cooking plate 140 which is equipped with an oil guide piece 142 protruding from an outer circumferential end of the lower side of an oil discharge hole 141 formed in the center thereof, while being seated at the top of the heat transfer plate 130; and an oil collector 150 which is installed at the lower side of the first body 110 so as to correspond to the lower end of the oil discharge tube 131 of the heat transfer plate 130; and the second heating unit 200 includes a second body 210 which is equipped with a second accommodation part 211 configured to accommodate a second heat generation member 220 formed of any one of ceramic, a coil, carbon, a crystal tube, a PTC (Positive Temperature Coefficient) heater, an infrared ray lamp, and a halogen lamp in a state where the lower side thereof is open; and a protective net 240 configured to cover the lower side of the second body 210; and the pillar 300 which is fixed using a bolt 50 through an engaging hole 302 formed at a lower end of the pillar 300 so as to be fixed at a surface of one side of the first heating unit 100, wherein a rotation piece 301 is formed at the top of the pillar 300 so as to be engaged by means of a hinge 202 through a pair of engaging pieces 201 spaced-apart at a surface of one side of the second heating unit.

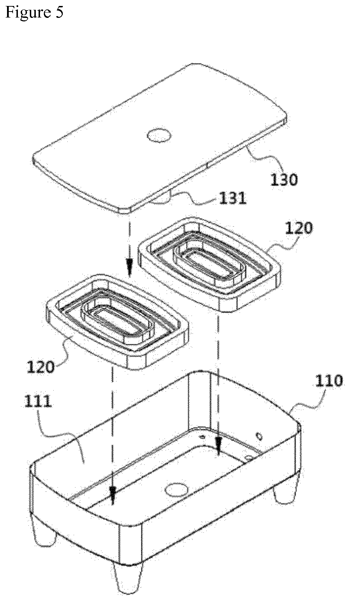

Referring to Figures 2 and 5, the first heating unit 100 may include a first body 110 formed of a first accommodation part 111 for accommodating a first heat generation member 120, and the first heat generation member 120 provided at the first accommodation part 111 of the first body 110 may be formed of any one of ceramic, a coil, carbon, a crystal tube, a PTC (Positive Temperature Coefficient) heater, an infrared ray lamp, and a halogen lamp so as to generate heat. The generated heat may be transferred via a heat transfer plate 130 provided integral while covering the top of the first body 110 in order for the heat generated by the first heat generation member 120 to be transferred.

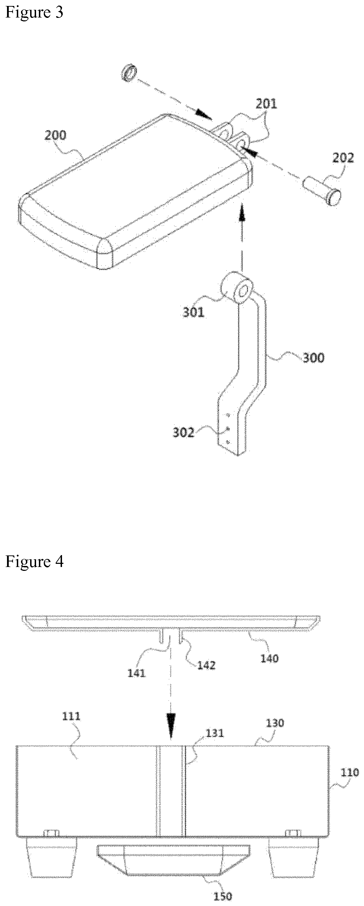

As illustrated in Figures 2 and 4, the heat transfer plate 130 may be passed through its center, thus forming a tubular oil discharge tube 141 which extends vertical together with the through hole in the downward direction of the perforated heat transfer plate 130, and an end of the oil discharge tube 131 communicates with the bottom surface of the first accommodation part 111.

Referring to Figure 2 and 4, an oil collector 150 may be disposed below the first body 110 of the first heating part 100. More specifically, the container-shaped-shaped oil collector 150 is provided below the first body 110 corresponding to the lower end of the oil discharge tube 131 in order for impurities, for example, oil, etc. to be discharged via the oil discharge pipe 131 of the heat transfer plate 130 and to be inputted and collected.

As illustrated in Figure 4, the cooking plate 140 disposed at the top of the heat transfer plate 130 may include an oil guide piece 142 protruding from a lower, outer circumferential end of an oil discharge hole 141 formed in the center, wherein the oil guide piece 142 is disposed inside the oil discharge tube 131 of the heat transfer tube 130, by which the impurities contained in the foods being cooked on the upper surface of the cooking plate 140 can be inputted through the oil discharge hole 141 and can be collected into the oil collector 150 through the oil discharge tube 131 of the heat transfer plate 130.

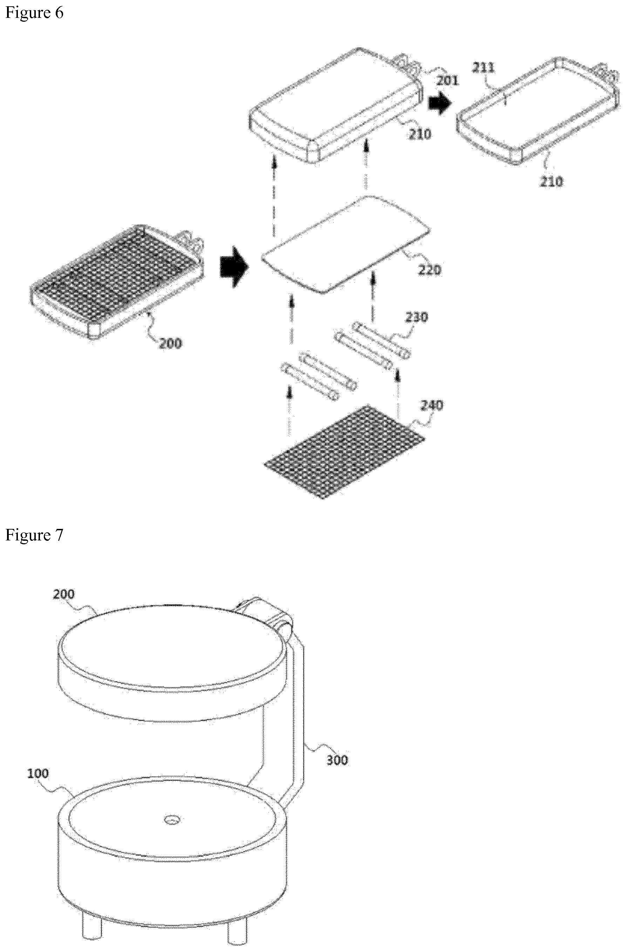

Referring to Figures 2 and 6, the second heating unit 200 is able to generate heat by means of the second heat generation part 230 provided at the second accommodation part 211 of the second body 210 and discharge the generated heat to the first heating unit 100 corresponding to the second heating unit 200, so the foods on the cooking plate 140 of the first heating unit 100 can be cooked. The second heating unit 200 is equipped with a reflection plate 220 configured to reflect heat generated by the second heat generation member 230, and a protection net 240 configured to support the second heat generation member 230 while making sure a user's safety.

As illustrated in Figures 2 and 3, there may be provided a pillar 300 which is able to guide the upward and downward rotations of the second heating part 200 while maintaining a predetermined space between the first heating unit 100 and the second heating unit 200. The bottom of the pillar 300 can be fixed at a surface of one side of the first heating unit 100 through an engaging hole 302 formed at a surface of the lower end of the pillar 300. A rotation piece 301 formed at the top of the pillar 300 may be coupled between a pair of engaging pieces 201 which are disposed spaced apart at a surface of one side of the second heating unit 200, and may be connected and assembled by means of a hinge 202, whereby the second heating unit 200 can move upward and downward.

A through hole may be formed passing through the left and right sides of the rotation piece 301 formed at the top of the pillar 300. Another through hole may be formed at a surface of one side of the second heating unit 200, while passing through the left and right surfaces of each of a pair of the engaging pieces 201, so the rotation piece 301 can be coupled between a pair of the engaging pieces 201, whereby each through hole communicates with each other, and the hinge 202 may be disposed inside the communicated through holes. In this state, the second heating unit 200 can rotate upward and downward with respect to the pillar 300.

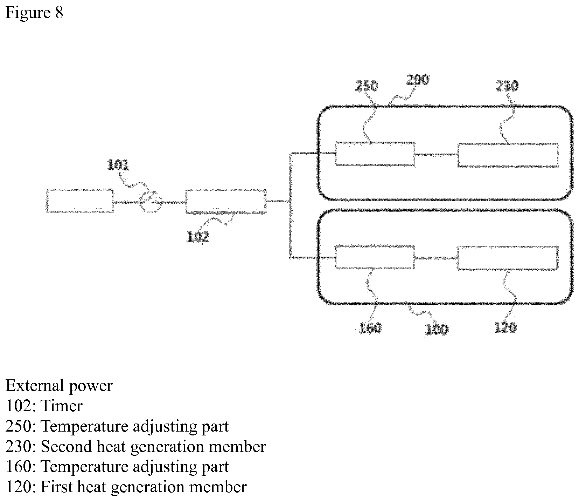

As illustrated in Figure 8, as an external electricity (not illustrated) is supplied to the first heating unit 100 and the second heating unit 200, the first heating unit 100 and the second heating unit 200 generate heat at the first heat generation member 120 and the second heat generation member 230 in association with the temperature adjusting parts 160 and 250 provided at the first and second heating units 100 and 200 through a timer 102 by a power switch 101. The power switch 10 may be formed of a limit switch which is able to instantly disconnect the supply of the power if the first and second heating units 100 and 200 become horizontal states or fall down due to an external impact. The power can be supplied from an external power through the power switch 101 and can be supplied to the timer 102. The timer 102 is employed to set cooking time, and the cooking time can be set based on the adjusted cooking time. If the set time of the timer 102 passes, the power supply may be automatically disconnected, so the power supply to the first and second heat generation parts 120 and 230 of the first and second heating units 100 and 200 can be disconnected.

In this way, electricity can be supplied to the temperature adjusting parts 160 and 250 provided at the first and second heating units 100 and 200 via the timer 102, and the temperature adjusting parts 160 and 250 are configured in such a way that electricity can be independently supplied or cannot be independently supplied to the first heat generation member 120 of the first heating unit 100 and the second heat generation member 230 of the second heating unit 200. If the temperature is over a predetermined temperature level after the temperature adjusting parts 160 and 250 are set to the set appropriate temperatures, the electricity supply may be disconnected or if less than the appropriate temperature level, the electricity can be supplied. Consequently, the electricity can be controlled by the temperature adjusting parts 160 and 250.

It is obvious that the configuration wherein the external electricity, the power switch 101, the timer 102, the temperature adjusting parts 160 and 250, and the first and second heat generation members 120 and 230 are connected via a power cable (not illustrated) to supply electricity, is referred to a known-art.

The multi-purpose heating device 10 formed of the first and second heating units 100 and 200 is invented for the sake of use of a warm heating in addition to a cooking purpose. In this way, the first heating unit 100 may be used for cooking, and the second heating unit 200 may be used for cooking or warming and heating based on individual power supply control methods. The second heating unit 200 may rotate upward and downward with the aid of the pillar 300, and after the cooking is finished, the user can easily pick up food on the cooking plate 140 of the first heating unit 100, and the surrounding environment can be heated warm with the aid of the second heat generation member 230 of the second heating unit 200, thus providing a warming and heating function. The angle may be adjusted in order for the engaging piece 201 of the second heating unit 200 and the rotation piece 301 of the pillar 300 to rotate upward and downward by the hinge 202, so the heat can be emitted to the portion which is set as a heat generation by the second heat generation member 230 of the second heating unit 200.

Moreover, the first and second heating units 100 and 200 are formed in a tetrahedron structure, but are not limited thereto. As illustrated in Figure 7, the first and second heating units may be manufactured in a polygonal shape, for example, a circular structure, etc.

The heat transfer plate 130 of the first heating unit 100 may be formed of a ceramic plate or a tempered glass plate. The multi-purpose heating device 10 of which the cooking plate 140 is made of a transparent tempered glass can be manufactured.

The heat transfer plate 130 is made of a material which is able to quickly absorb heat, for example, a ceramic plate or a tempered glass plate, when the heat is emitted from the first heat generation member 120 of the first heating unit 100, and the heat transfer plate 130 which has absorbed the heat, is made of a transparent tempered glass for the heat to be quickly transferred to the cooking plate 140.

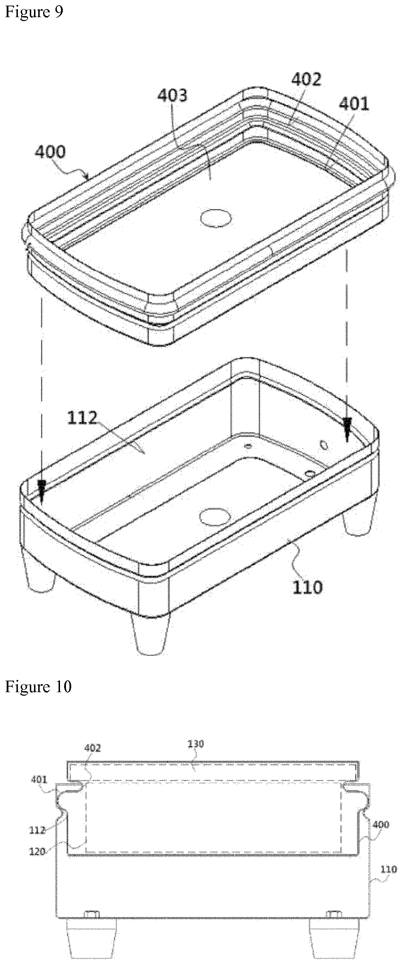

Referring to Figures 9 and 10, there is provided a multi-purpose heating device 10 which is equipped with a protective case 400 inserted inside of the first body 110 of the first heating unit 100, wherein a first protrusion strip 112 protruding inward may be formed at an inner circumferential surface of the first body 110 of the first heating part 100, and a second protrusion strip 401 protruding outward may be formed at an outer circumferential surface thereof, so the second protrusion strip 401 can be hooked by the first protrusion strip 112 and can be seated. A third protrusion strip 402 protruding inward may be formed at an inner circumferential surface of the top of the second protrusion strip 401.

A third accommodation part 403 may be formed inside of the protective case 400, wherein the first heat generation member 120 is accommodated in the third accommodation part 403. A through hole may be formed in the center of the bottom surface of the inside, wherein the oil discharge tube 131 of a heat shielding plate 130 is inserted inside of the through hole. The second protrusion stripe 401 of the protective case 400 is blocked by the first protrusion stripe 112 formed at the inner side of the first body 110 of the first heating unit 100, and the second protrusion strips 401 may surface-contact surface with the top of the first protrusion stripe 112, thus blocking the protective case 400 from descending downward of the first body 110 or separating from the same. This may contribute to preventing the heat from being discharged toward the bottom of the first body 110 of the first heating unit 100 and outward of the first body 110. A space, therefore, can be formed between the bottom surface of the protective case 400 and the bottom surface of the first body 110, by which it is possible to block the heat from being discharged downward of the first body 110 and to the outside.

Since the first heat generation member 120 is accommodated in the third accommodation part 403 of the protective case 400, the protective case 400 can be easily attached or detached from the first body 110 when it needs to repair or exchange the first heat generation member 120.

Since the third protrusion stripe 402 is formed at the inner side of the inner circumferential surface of the protective case 400, the circumference, namely, the outer side surface of the heat shielding plate 130 may be stopped by the third protrusion stripe 402 when seating the heat shielding plate 130 at the top of the protective case 400, by which it is possible to prevent the circumference thereof from separating downward into the inside of the protective case 400. The present invention is able to provide an assembled structure which allows the heat shielding plate 130 to be easily attached or detached.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A multi-purpose heating device, comprising:
a first heating unit 100 disposed at the bottom thereof;
a second heating unit 200 disposed at the top thereof; and
a pillar 300 which vertically connects one side end of the first heating unit 100 with one side end of the second heating unit 200 so as to form a space between the first and second heating units 100 and 200,
wherein the first heating unit 100 includes:
a first body 110 equipped with a first accommodation part 111 configured to accommodate a first heat generation member 120 formed of any one of ceramic, a coil, carbon, a crystal tube, a PTC (Positive Temperature Coefficient) heater, an infrared ray lamp and a halogen lamp, which are able to emit heat in to the inside based on the supply of electricity;
a heat transfer plate 130 which is equipped with a tubular oil discharge tube 131 communicating with the center of the bottom surface of the first accommodation part 111 in the center thereof, while covering the top of the first body 110;
a cooking plate 140 which is equipped with an oil guide piece 142 protruding from an outer circumferential end of the lower side of an oil discharge hole 141 formed in the center thereof, while being seated at the top of the heat transfer plate 130; and
an oil collector 150 which is installed at the lower side of the first body 110 so as to correspond to the lower end of the oil discharge tube 131 of the heat transfer plate 130; and
the second heating unit 200 includes:
a second body 210 which is equipped with a second accommodation part 211 configured to accommodate a second heat generation member 220 formed of any one of ceramic, a coil, carbon, a crystal tube, a PTC (Positive Temperature Coefficient) heater, an infrared ray lamp, and a halogen lamp in a state where the lower side thereof is open; and
a protective net 240 configured to cover the lower side of the second body 210; and
the pillar 300 which is fixed using a bolt 50 through an engaging hole 302 formed at a lower end of the pillar 300 so as to be fixed at a surface of one side of the first heating unit 100, wherein a rotation piece 301 is formed at the top of the pillar 300 so as to be engaged by means of a hinge 202 through a pair of engaging pieces 201 spaced-apart at a surface of one side of the second heating unit.

2. The device of claim 1, wherein the supply or disconnection to the first heating unit 100 and the second heating unit 200 can be carried out by a power in a state where an external power has been supplied thereto, and the electricity supplied by means of the power switch is transferred to temperature adjusting parts 160 and 250 provided at the first and second heating units 100 and 200 via a timer 102, so heat can be generated from the first heat generation member 120 and the second heat generation member 230.

3. The device of claim 1, wherein the heat transfer plate 130 of the first heating part 100 is made of a ceramic plate or a tempered glass plate, and the cooking plate 140 is made of a transparent tempered glass.

4. The device of claim 1, further comprising:
a protective case 400 which is inserted inside the first body 110 of the first heating unit 100 in such a way that a first protrusion stripe 112 protruding inward is formed at an inner circumferential surface of the first body 110 of the first heating unit 100, and a second protrusion stripe 401 protruding outward is formed at an outer circumferential surface for the second protrusion stripe 401 to be hooked by the first protrusion stripe 112 and to be seated, and a third protrusion stripe 402 protruding inward is formed at an inner circumferential surface of the top of the second protrusion stripe 401.
